(19) Europäisches Patentamt / European Patent Office / Office européen des brevets

(11) **EP 4 429 335 A1**

(12) **EUROPEAN PATENT APPLICATION**
published in accordance with Art. 153(4) EPC

(43) Date of publication:
**11.09.2024 Bulletin 2024/37**

(21) Application number: **22889055.4**

(22) Date of filing: **10.10.2022**

(51) International Patent Classification (IPC):
**H04W 52/24** (2009.01)    **H04W 52/48** (2009.01)

(52) Cooperative Patent Classification (CPC):
**H04W 52/24; H04W 52/48**

(86) International application number:
**PCT/CN2022/124351**

(87) International publication number:
**WO 2023/078029 (11.05.2023 Gazette 2023/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **05.11.2021  CN 202111308588**

(71) Applicant: **Datang Mobile Communications Equipment Co., Ltd.**
**Beijing 100085 (CN)**

(72) Inventor: **WANG, Junwei**
**Beijing 100085 (CN)**

(74) Representative: **Studio Torta S.p.A.**
**Via Viotti, 9**
**10121 Torino (IT)**

(54) **POWER CONTROL PARAMETER DETERMINATION METHOD AND APPARATUS, AND TERMINAL DEVICE**

(57)    A power control parameter determination method, a power control parameter determination device and a UE are provided, and related to the field of communication technology. The method is performed by the UE and includes determining a control parameter for power control over a PUCCH in accordance with a first parameter. The first parameter is the quantity of bits of an HARQ-ACK for HARQ-ACK bundling in the case that a plurality of PDSCHs is scheduled through one piece of DCI.

determining a control parameter for power control over a PUCCH in accordance with a first parameter — S201

**FIG. 2**

EP 4 429 335 A1

## Description

### CROSS-REFERENCE TO RELATED APPLICATION

This application claims a priority of the Chinese patent application No.202111308588.3 filed on November 5, 2021, which is incorporated herein by reference in its entirety.

### TECHNICAL FIELD

The present disclosure relates to the field of communication technology, in particular to a power control parameter determination method, a power control parameter determination device, and a User Equipment (UE).

### BACKGROUND

In the related art, a Physical Uplink Control Channel (PUCCH) carries a function of Uplink Control Information (UCI), and transmission power of the PUCCH is controlled. When the UCI includes feedback information of a Hybrid Automatic Repeat reQuest Acknowledge (HARQ-ACK), a parameter $n_{\text{HARQ-ACK}}$ for feeding back the HARQ-ACK needs to be calculated. This parameter refers to the quantity of feedback bits corresponding to a Physical Downlink Shared Channel (PDSCH) actually received by a UE, and it is used for controlling the transmission power of the PUCCH. When the quantity of bits of the UCI is greater than 11, $n_{\text{HARQ-ACK}}$ is calculated in accordance with a length of an HARQ-ACK codebook, and when the quantity of bits of the UCI is smaller than or equal to 11, $n_{\text{HARQ-ACK}}$ needs to be calculated in accordance with scheduling Downlink Control Information (DCI) received by the UE.

In New Radio (NR) Release 17 (R17) high-frequency standard, a scenario where a plurality of PDSCHs are scheduled through one piece of DCI and a plurality of HARQ-ACKs needs to be fed back is supported. However, there is no scheme in the related art for obtaining $n_{\text{HARQ-ACK}}$ in this situation.

### SUMMARY

An object of the present disclosure is to provide a power control parameter determination method, a power control parameter determination device and a UE, to solve the problem in the art where there is no scheme for obtaining a power control parameter of the PUCCH in such a circumstance where the transmission of a plurality of PDSCHs is scheduled, thereby to ensure the network communication reliability.

In one aspect, the present disclosure provides in some embodiments a power control parameter determination method performed by a UE, including determining a control parameter for power control over a PUCCH in accordance with a first parameter. The first parameter is the quantity of bits of an HARQ-ACK for HARQ-ACK bundling in the case that a plurality of PDSCHs is scheduled through one piece of DCI.

Optionally, the determining the control parameter for power control over the PUCCH in accordance with the first parameter includes: determining the quantity of bits of a first HARQ-ACK corresponding to first DCI in accordance with the first parameter, the first DCI being one or more pieces of DCI not detected by the UE; determining the quantity of bits of a second HARQ-ACK corresponding to a first Transport Block (TB) in accordance with the first parameter and received TBs, the first TB being one or more TBs received by the UE; and determining the control parameter for power control over the PUCCH in accordance with the quantity of bits of the first HARQ-ACK and the quantity of bits of the second HARQ-ACK.

Optionally, the determining the quantity of bits of the first HARQ-ACK corresponding to the first DCI in accordance with the first parameter includes: determining the quantity of pieces of the first DCI; and determining the quantity of bits of the first HARQ-ACK corresponding to the first DCI in accordance with the quantity of pieces of the first DCI and the first parameter.

Optionally, the determining the quantity of pieces of the first DCI includes determining the quantity of pieces of the first DCI in accordance with $V_{\text{DAI},m_{\text{last}}}^{\text{DL}}$, $N_{\text{cells}}^{\text{DL}}$, and $U_{\text{DAI},c}$, where $V_{\text{DAI},m_{\text{last}}}^{\text{DL}}$ represents a value of a Downlink Assignment Index (DAI) of a last piece of DCI, $N_{\text{cells}}^{\text{DL}}$ represents the quantity of serving cells configured by a network device for the UE, and $U_{\text{DAI},c}$ represents teh quantity of pieces of received scheduling DCI.

Optionally, the determining the quantity of bis of the first HARQ-ACK corresponding to the first DCI in accordance with the quantity of pieces of the first DCI and the first parameter includes determining the quantity of bits of the first HARQ-ACK corresponding to the first DCI through $S \times N_{\text{TB,max}}^{\text{DL}} \times N$, where S represents the quantity of pieces of the

first DCI, $N_{\mathrm{TB,max}}^{\mathrm{DL}}$ represents a maximum quantity of feedback bits of a PDSCH scheduled through the first DCI, and N represents the first parameter.

Optionally, the determining the quantity of bits of the second HARQ-ACI corresponding to the first TB in accordance with the first parameter and the received TBs includes: determining first information, the first information including at least one of the quantity of bits of a third HARQ-ACK to be fed back through each piece of scheduling DCI, or the quantity of bits of a fourth HARQ-ACK to be fed back for semi-persistently scheduling a plurality of PDSCHs in each cell, the scheduling DCI being DCI through which the HARQ-ACK needs to be fed back on the PUCCH, the cell being a serving cell configured by a network device for the UE; and determining the quantity of bits of the second HARQ-ACK corresponding to the first TB in accordance with the first information.

Optionally, the determining the quantity of bits of the third HARQ-ACK to be fed back through each piece of scheduling DCI includes determining the quantity of bits of the third HARQ-ACK to be fed back through second DCI in accordance with the first parameter and the quantity of pieces of target information scheduled through the second DCI, the second DCI is any scheduling DCI, and the target information includes an active PDSCH or an active TB.

Optionally, in the case that the target information is the active TB, the determining the quantity of bits of the third HARQ-ACK to be fed back through the second DCI in accordance with the first parameter and the quantity of pieces of target information scheduled through the second DCI includes any one of: determining the quantity of bits of a to-be-fed-back HARQ-ACK corresponding to each category of TBs scheduled through the second DCI in accordance with the first parameter and the quantity of active TBs scheduled through the second DCI, determining a sum of the quantities of bits of to-be-fed-back HARQ ACKs corresponding to all categories of TBs scheduled through the second DCI as the quantity of bits of the third HARQ-ACK to be fed back through the second DCI, each category of TBs corresponding to TBs having a same identifier for a plurality of PDSCHs scheduled through the second DCI; or determining the quantity of bits of to-be-fed-back HARQ-ACKs corresponding to all active TBs scheduled through the second DCI in accordance with the first parameter and the quantity of active TBs scheduled through the second DCI, and determining the quantity of bits of the to-be-fed-back HARQ-ACKs corresponding to through all the active TBs scheduled through the second DCI as the quantity of bits of the third HARQ-ACK to be fed back through the second DCI.

Optionally, the determining the quantity of bits of the to-be-fed-back HARQ-ACK corresponding to each category of TBs scheduled through the second DCI in accordance with the first parameter and the quantity of active TBs scheduled through the second DCI includes any one of: determining the quantity of bits of the to-be-fed-back HARQ-ACK corresponding to each category of TBs through min (N,X); or determining the quantity of bits of the to-be-fed-back HARQ-ACK corresponding to an $i^{\mathrm{th}}$ category of TBs through min (N,$X_i$), where N represents the first parameter, X represents the quantity of active PDSCHs scheduled through the second DCI, and $X_i$ represents the quantity of TBs in the $i^{\mathrm{th}}$ category of TBs in an enabled state in the PDSCH scheduled through the second DCI.

Optionally, the determining the quantity of bits of the to-be-fed-back HARQ-ACKs corresponding to all active TBs scheduled through the second DCI in accordance with the first parameter and the quantity of active TBs scheduled through the second DCI includes determining the quantity of bits of the to-be-fed-back HARQ-ACKs corresponding to all active TBs scheduled through the second DCI through min (H×N, $\sum_{i=1}^{H} X_i$ ), where N represents teh first parameter, H represents the maximum quantity of categories of TBs allowed to be scheduled through the second DCI, and $X_i$ represents the quantity of TBs in an $i^{\mathrm{th}}$ category of TBs in an enabled state in the PDSCH scheduled through the second DCI.

Optionally, the determining the quantity of bits of the fourth HARQ-ACK to be fed back for semi-persistent scheduling multi-PDSCH in each cell includes determining the quantity of bits of the fourth HARQ-ACK to be fed back for semi-persistent scheduling multi-PDSCH in each cell in accordance with the quantity of bits of an HARQ-ACK to be fed back in semi-persistent PDSCH scheduling in the case of single-codeword transmission as well as a second parameter, and the second parameter is the quantity of active PDSCHs actually transmitted in semi-static Semi-persistent Scheduling (SPS) transmission or the quantity of PDSCHs scheduled through an activation command when an SPS configuration is activated.

Optionally, the determining the quantity of bits of the fourth HARQ-ACK to be fed back for semi-persistent scheduling multi-PDSCH in each cell in accordance with the quantity of bits of the HARQ-ACK to be fed back in semi-persistent PDSCH scheduling in the case of single-codeword transmission as well as the second parameter includes determining the quantity of bits of the fourth HARQ-ACK to be fed back for semi-persistent scheduling multi-PDSCH in each cell through min (N2, K), where N2 represents the quantity of bits of an HARQ-ACK to be fed back in semi-persistent PDSCH scheduling in the case of single-codeword transmission, and K represents the second parameter.

Optionally, the first parameter is configured by a network device, agreed in a protocol, or determined in accordance with the maximum quantity of PDSCHs scheduled through one piece of DCI.

Optionally, a value of the first parameter is smaller than or equal to the maximum quantity of PDSCHs scheduled through one piece of DCI.

Optionally, when the first parameter is determined in accordance with the maximum quantity of PDSCHs scheduled through one piece of DCI, the maximum quantity of PDSCHs scheduled through one piece of DCI is configured by the network device, or obtained from a PDSCH time-domain scheduling parameter table.

In another aspect, the present disclosure provides in some embodiments a UE, including a memory, a transceiver and a processor. The memory is configured to store therein a computer program, the transceiver is configured to receive and transmit data under the control of the processor, and the processor is configured to read the computer program in the memory to determine a control parameter for power control over a PUCCH in accordance with a first parameter. The first parameter is the quantity of bits of an HARQ-ACK for HARQ-ACK bundling in the case that a plurality of PDSCHs is scheduled through one piece of DCI.

Optionally, the processor is configured to read the computer program in the memory to: determine the quantity of bits of a first HARQ-ACK corresponding to first DCI in accordance with the first parameter, the first DCI being one or more pieces of DCI not detected by the UE; determine the quantity of bits of a second HARQ-ACK corresponding to a first TB in accordance with the first parameter and received TBs, the first TB being one or more TBs received by the UE; and determine the control parameter for power control over the PUCCH in accordance with the quantity of bits of the first HARQ-ACK and the quantity of bits of the second HARQ-ACK.

Optionally, the processor is configured to read the computer program in the memory, to: determine the quantity of pieces of the first DCI; and determine the quantity of bits of the first HARQ-ACK corresponding to the first DCI in accordance with the quantity of pieces of the first DCI and the first parameter.

Optionally, the processor is configured to read the computer program in the memory, to determine the quantity of pieces of the first DCI in accordance with $V_{\mathrm{DAI},m_{\mathrm{last}}}^{\mathrm{DL}}$, $N_{\mathrm{cells}}^{\mathrm{DL}}$, and $U_{\mathrm{DAI},c}$, where $V_{\mathrm{DAI},m_{\mathrm{last}}}^{\mathrm{DL}}$ represents a value of a Downlink Assignment Index (DAI) of a last piece of DCI, $N_{\mathrm{cells}}^{\mathrm{DL}}$ represents the quantity of serving cells configured by a network device for the UE, and $U_{\mathrm{DAI},c}$ represents teh quantity of pieces of received scheduling DCI.

Optionally, the processor is configured to read the computer program in the memory to determine the quantity of bits of the first HARQ-ACK corresponding to the first DCI through $S \times N_{\mathrm{TB,max}}^{\mathrm{DL}} \times N$, where S represents the quantity of pieces of the first DCI, $N_{\mathrm{TB,max}}^{\mathrm{DL}}$ represents a maximum quantity of feedback bits of a PDSCH scheduled through the first DCI, and N represents the first parameter.

Optionally, the processor is configured to read the computer program in the memory, to: determine first information, the first information including at least one of the quantity of bits of a third HARQ-ACK to be fed back through each piece of scheduling DCI, or the quantity of bits of a fourth HARQ-ACK to be fed back for semi-persistently scheduling a plurality of PDSCHs in each cell, the scheduling DCI being DCI through which the HARQ-ACK needs to be fed back on the PUCCH, the cell being a serving cell configured by a network device for the UE; and determine the quantity of bits of the second HARQ-ACK corresponding to the first TB in accordance with the first information.

Optionally, the processor is configured to read the computer program in the memory, to determine the quantity of bits of the third HARQ-ACK to be fed back through second DCI in accordance with the first parameter and the quantity of pieces of target information scheduled through the second DCI, the second DCI is any scheduling DCI, and the target information includes an active PDSCH or an active TB.

Optionally, in the case that the target information is the active TB, the processor is configured to read the computer program in the memory, to perform any one of: determining the quantity of bits of a to-be-fed-back HARQ-ACK corresponding to each category of TBs scheduled through the second DCI in accordance with the first parameter and the quantity of active TBs scheduled through the second DCI, determining a sum of the quantities of bits of to-be-fed-back HARQ ACKs corresponding to all categories of TBs scheduled through the second DCI as the quantity of bits of the third HARQ-ACK to be fed back through the second DCI, each category of TBs corresponding to TBs having a same identifier for a plurality of PDSCHs scheduled through the second DCI; or determining the quantity of bits of to-be-fed-back HARQ-ACKs corresponding to all active TBs scheduled through the second DCI in accordance with the first parameter and the quantity of active TBs scheduled through the second DCI, and determining the quantity of bits of the to-be-fed-back HARQ-ACKs corresponding to through all the active TBs scheduled through the second DCI as the quantity of bits of the third HARQ-ACK to be fed back through the second DCI.

Optionally, the processor is configured to read the computer program in the memory to perform any one of: determining the quantity of bits of the to-be-fed-back HARQ-ACK corresponding to each category of TBs through min (N,X); or determining the quantity of bits of the to-be-fed-back HARQ-ACK corresponding to an $i^{\mathrm{th}}$ category of TBs through min (N,$X_i$), where N represents the first parameter, X represents the quantity of active PDSCHs scheduled through the second DCI, and $X_i$ represents the quantity of TBs in the $i^{\mathrm{th}}$ category of TBs in an enabled state in the PDSCH scheduled through the second DCI.

Optionally, the processor is configured to read the computer program in the memory, to determine the quantity of bits of the to-be-fed-back HARQ-ACKs corresponding to all active TBs scheduled through the second DCI through $\min (H \times N, \sum_{i=1}^{H} X_i)$, where N represents teh first parameter, H represents the maximum quantity of categories of TBs allowed to be scheduled through the second DCI, and $X_i$ represents the quantity of TBs in an $i^{th}$ category of TBs in an enabled state in the PDSCH scheduled through the second DCI.

Optionally, the processor is configured to read the computer program in the memory, to determine the quantity of bits of the fourth HARQ-ACK to be fed back for semi-persistent scheduling multi-PDSCH in each cell in accordance with the quantity of bits of an HARQ-ACK to be fed back in semi-persistent PDSCH scheduling in the case of single-codeword transmission as well as a second parameter, and the second parameter is the quantity of active PDSCHs actually transmitted in semi-static SPS transmission or the quantity of PDSCHs scheduled through an activation command when an SPS configuration is activated.

Optionally, the processor is configured to read the computer program in the memory, to determine the quantity of bits of the fourth HARQ-ACK to be fed back for semi-persistent scheduling multi-PDSCH in each cell through min (N2, K), where N2 represents the quantity of bits of an HARQ-ACK to be fed back in semi-persistent PDSCH scheduling in the case of single-codeword transmission, and K represents the second parameter.

Optionally, the first parameter is configured by a network device, agreed in a protocol, or determined in accordance with the maximum quantity of PDSCHs scheduled through one piece of DCI.

Optionally, a value of the first parameter is smaller than or equal to the maximum quantity of PDSCHs scheduled through one piece of DCI.

Optionally, when the first parameter is determined in accordance with the maximum quantity of PDSCHs scheduled through one piece of DCI, the maximum quantity of PDSCHs scheduled through one piece of DCI is configured by the network device, or obtained from a PDSCH time-domain scheduling parameter table.

In yet another aspect, the present disclosure provides in some embodiments a power control parameter determination device applied to a UE, including a determination unit configured to determine a control parameter for power control over a PUCCH in accordance with a first parameter. The first parameter is the quantity of bits of an HARQ-ACK for HARQ-ACK bundling in the case that a plurality of PDSCHs is scheduled through one piece of DCI.

In still yet another aspect, the present disclosure provides in some embodiments a processor-readable storage medium storing therein a computer program. The computer program is executed by a processor to implement the above-mentioned method.

The present disclosure has the following beneficial effects.

According to the embodiments of the present disclosure, the control parameter for power control over the PUCCH is determined in accordance with the quantity of bits of the HARQ-ACK for HARQ-ACK bundling when a plurality of PDSCHs is scheduled through one piece of DCI. As a result, it is able to provide a scheme for obtaining the control parameter for power control over the PUCCH in the case of multi-PDSCH transmission scheduling, to reduce the power consumption for transmitting by the UE a signal while ensuring the transmission reliability.

**BRIEF DESCRIPTION OF THE DRAWINGS**

In order to illustrate the technical solutions of the present disclosure in a clearer manner, the drawings desired for the present disclosure will be described hereinafter briefly. Obviously, the following drawings merely relate to some embodiments of the present disclosure, and based on these drawings, a person skilled in the art may obtain the other drawings without any creative effort.

Fig. 1 is a schematic view showing an applicable network system according to one embodiment of the present disclosure;
Fig. 2 is a flow chart of a power control parameter determination method according to one embodiment of the present disclosure;
Fig. 3 is a schematic view showing a calculation result of f (N, X) for feeding back an HARQ-ACK in a bundling manner;
Fig. 4 is a schematic view showing a scheduling state of TBs corresponding to each PDSCH;
Fig. 5 is a block diagram of a power control parameter determination device according to one embodiment of the present disclosure; and
Fig. 6 is a schematic view showing a UE according to one embodiment of the present disclosure.

**DETAILED DESCRIPTION**

In order to make the objects, the technical solutions and the advantages of the present disclosure more apparent, the present disclosure will be described hereinafter in a clear and complete manner in conjunction with the drawings and embodiments. Obviously, the following embodiments merely relate to a part of, rather than all of, the embodiments of the present disclosure, and based on these embodiments, a person skilled in the art may, without any creative effort, obtain the other embodiments, which also fall within the scope of the present disclosure.

Such words as "first" and "second" involved in the specification and the appended claims are merely used to differentiate different objects rather than to represent any specific order. It should be appreciated that, the data used in this way may be replaced with each other, to implement the embodiments in an order other than that shown in the drawings or described in the specification. In addition, such terms as "include" or "including" or any other variations involved in the present disclosure intend to provide non-exclusive coverage, so that a procedure, method, system, product or device including a series of steps or units may also include any other elements not listed herein, or may include any inherent steps or units of the procedure, method, system, product or device.

The expression "and/or" in the embodiments of the present disclosure may be merely used to describe the relationship between objects, and it may include three relationships. For example, "A and/or B" may represent that, there is only A, there are both A and B, and there is only B. Further, the symbol "/" usually refers to "or". The expression "a plurality of' refers to two or more, and the other quantifiers are similar.

Such expressions as "illustratively" and "for example" are merely used to show examples or explanations. Any illustrative embodiment or scheme in the present disclosure shall not be construed as being superior over the other embodiment or scheme. Definitely, these words intend to exhibit relevant concepts in a concrete manner.

The present disclosure will be described hereinafter in conjunction with the drawings. A power control parameter determination method, a power control parameter determination device and a UE in the embodiments of the present disclosure are applied to a wireless communication system, e.g., a 5th-Generation (5G) mobile communication system (5G system for short). It should be appreciated that, the 5G NR system is for illustratively purposes only, but shall not be used to limit the scope of the present disclosure.

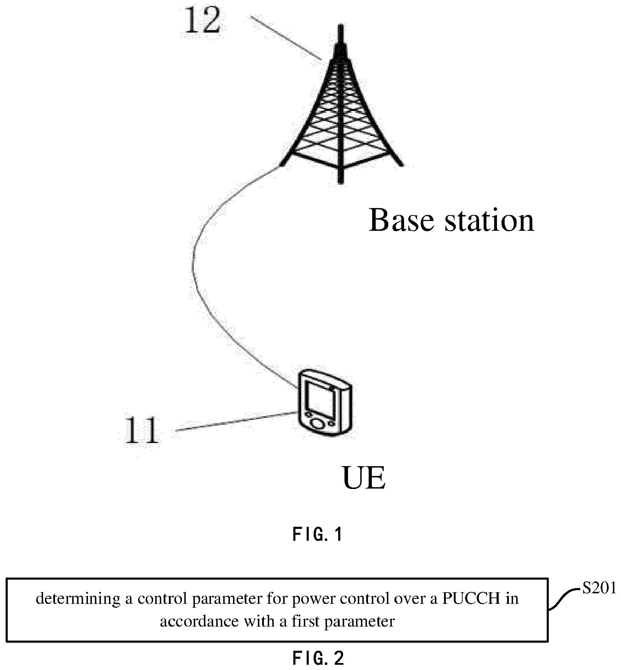

Fig. 1 shows an applicable network system. As shown in Fig. 1, the network system includes a terminal 11 and a base station. The terminal 11 is a UE, e.g., a terminal side device such as mobile phone, tablet personal computer, laptop computer, Personal Digital Assistant (PDA), Mobile Internet Device (MID) or wearable device. It should be appreciated that, a specific type of the terminal 11 will not be particularly defined herein. The base station 12 is a 5G base station or a future base station (e.g., gNB or 5G NR NB), or a base station in the other communication system, or Node B. It should be appreciated that, in the embodiments of the present disclosure, the 5G base station is taken as an example, but a specific type of the base station 12 will not be particularly defined herein.

At first, some concepts involved in the embodiments of the present disclosure will be described as follows.

1. Single PDSCH scheduling-based HARQ-ACK dynamic codebook type 2 (type-2) mechanism

In a conventional 5G system, a generation mechanism of a dynamic HARQ-ACK codebook is supported. Its principle includes, when scheduling signaling, i.e., DCI, is transmitted, a DAI indication is added, and the UE calculates the quantity of PDSCHs and DCI actually transmitted by the base station in accordance with the DAI, to determine the quantity of to-be-fed-back PDSCHs in the HARQ-ACK codebook.

The following description will be given in a single-carrier scenario (where there merely exists a C-DAI).

It is presumed that 9 pieces of DCI for scheduling the PDSCHs are transmitted by the base station, i.e., DCI-1 to DCI-9. A bit width of the DAI for counting includes 2 bits, i.e., a maximum counting range $T_D$ is 4, and j represents the quantity of cycles for calculating, by the UE, values of the DAIs (when a DAI in a current piece of DCI is smaller than or equal to a DAI in a previous piece of DCI, a value of j is incremented by 1).

Based on a current DAI counting mechanism, the UE calculates the quantity of pieces of DCIs transmitted by the base station through $V_{\mathrm{DAI},m_{\mathrm{last}}}^{\mathrm{DL}} + T_D * j$, where $V_{\mathrm{DAI},m_{\mathrm{last}}}^{\mathrm{DL}}$ represents a value of a DAI in a last piece of DCI (DAI=1 in DCI-9), i.e., the quantity of pieces of scheduling DCI is 1+4*2=9. The UE further calculates the quantity of TBs for feeding back the HARQ-ACK and the quantity $O_{\mathrm{ACK}}$ of bits of the HARQ codebook in accordance with the quantity of pieces of the scheduling DCI.

When the base station schedules a codebook feedback that supports multicasting, the quantity $O_{\mathrm{ACK}}$ of bits of the HARQ-ACK codebook fed back by the UE on a PUCCH is equal to a sum of the quantity of bits of a unicasting HARQ sub-codebook and the quantity of bits of a multicasting HARQ sub-codebook. For example, $O_{\mathrm{ACK}} = O_{\mathrm{ACK}}(unicast) +$

$\sum_{i=0}^{N-1} O_{\text{ACK(G-RNIT(I))}}$ , where $O_{\text{ACK}}$(*unicast*) represents a length of the unicasting AHRQ-ACK sub-codebook, $O_{\text{ACK(G-RNIT(I))}}$ represents a length of a sub-codebook corresponding to G-RNTI(i), and N represents a length of the HARQ-ACK codebook configured by the base station and fed back on the PUCCH.

2. Scheduling multiple PDSCHs through one piece of DCI and HARQ-ACK feedback mechanism

Multiple PDSCHs are supported to be scheduled through one piece of DCI at a high frequency. When the HARQ-ACK codebook configured by the base station is a dynamic codebook (Type-2), a DAI counting method based on each DCI is supported. At most max_PDSCH PDSCHs are scheduled through each piece of DCI (e.g., max_PDSCH=8), but the quantity N of bits of ACK/Non-Acknowledgement (NACK) is previously configured by the base station, or agreed in a protocol. There are the following two circumstances. (1) N=max_PDSCH. At this time, the quantity of bits of the HARQ-ACK is equal to the maximum quantity of scheduled PDSCHs, and this mode is called as feedback mode 1. (2) N<max_PDSCH. At this time, the quantity of bits of the HARQ-ACK is smaller than the maximum quantity of scheduled PDSCHs, and this mode is called as feedback mode 2 (also called as bundling mode).
The above two feedback modes will be illustratively described hereinafter.
It is presumed that, as configured by the base station, M=max_PDSCH, and the maximum quantity of PDSCH scheduled through each piece of DCI is 4 or smaller than 4.
It is presumed that, as configured by the base station, N=4, i.e., with respect to each piece of DCI, a 4-bit HARQ-ACK is always fed back, regardless of the quantity of the actually-scheduled PDSCHs. For example, X=4 PDSCHs are scheduled through DCI-1, and each PDSCH occupies 1 bit in the HARQ-ACK codebook, i.e., the PDSCHs scheduled through DCI-1 totally occupy 4 bits. X=2 PDSCHs are scheduled through DCI-2, each PDSCH occupies 1 bit in the HARQ-ACK codebook, and two NACK bits are added so that 4 bits are fed back through the DCI-2.

Feedback mode 2 (N<max_PDSCH)

It is presumed that, as configured by the base station, max_PDSCH=4, and the maximum quantity of PDSCHs scheduled through each piece of DCI is 4 or smaller than 4.
It is presumed that, as configured by the base station, N=2, i.e., with respect to each piece of DCI, a 2-bit HARQ-ACK is always fed back, regardless of the quantity of the actually-scheduled PDSCHs.
When the quantity of the actually-scheduled PDSCHs is greater than N, the N-bit HARQ-ACK is also fed back, and at this time, the feedback information for a plurality of PDSCHs is fed back in a bundling manner.
When the quantity of the actually-scheduled PDSCHs is smaller than or equal to N, the N-bit HARQ-ACK is also fed back, and at this time, 1-bit information is fed back for each PDSCH, and the remaining information bits are supplemented with NACK.
For example, X=4 PDSCHs are scheduled through DCI-1. In the HARQ-ACK codebook, feedback information for PDSCH-1 and PDSCH-2 adopts bit OR (i.e., when the feedback information for the two PDSCHs is ACK, ACK is fed back, and when the feedback information for one of the two PDSCHs is NACK, NACK is fed back), and it occupies 1 bit. Feedback information for PDSCH-3 and PDSCH-4 adopts bit OR (i.e., when the feedback information for the two PDSCHs is ACK, ACK is fed back, and when the feedback information for one of the two PDSCHs is NACK, NACK is fed back), and it occupies 1 bit.
X=2 PDSCHs are scheduled through DCI-2, and in the HARQ-ACK codebook, each PDSCH occupies 1 bit, i.e., totally 2 bits are occupied.
Especially, when max_PDSCH=1, the HARQ-ACKs for all the PDSCHs scheduled through each piece of DCI are bound to one bit.
An object of the present disclosure is to provide a power control parameter determination method, a power control parameter determination device and a UE, to solve the problem in the art where there is no scheme for obtaining a power control parameter of the PUCCH in such a circumstance where the transmission of a plurality of PDSCHs is scheduled, thereby to ensure the network communication reliability.
The method and the device are based on a same inventive concept, and a principle of the method for solving the problem is similar to that of the device, so the implementation of the device may refer to that of the method.
As shown in Fig. 2, the present disclosure provides in some embodiments a power control parameter determination method performed by a UE, which includes Step S201 of determining a control parameter for power control over a PUCCH in accordance with a first parameter. It should be appreciated that, the first parameter is the quantity of bits of an HARQ-ACK for HARQ-ACK bundling in the case that a plurality of (two or more) PDSCHs is scheduled through one piece of DCI.
It should be appreciated that, the first parameter is configurable, and there are the following circumstances.

First circumstance: the first parameter is equal to max_PDSCH (the maximum quantity of PDSCHs configured by a base station and scheduled through one piece of DCI (also called as the maximum quantity of PDSCHs scheduled through one piece of DCI)).

In other words, the maximum quantity of PDSCHs scheduled through one piece of DCI is equal to the quantity of bits of a to-be-fed-back HARQ-ACK. When the quantity of PDSCHs scheduled through one piece of DCI is X, with respect to X PDSCHs, values of the HARQ-ACKs (X pieces of unknown information) are determined in accordance with a channel decoding result, and max_PDSCH-X pieces of HARQ-ACK feedback information are filled with known information (N-X pieces of known information, e.g., NACK or ACK).

Here, it should be appreciated that, in this circumstance, the HARQ-ACKs for the PDSCHs are not bundled, which may be considered as a special situation of bundling.

Second circumstance: the first parameter is smaller than max_PDSCH.

In other words, the quantity of bits of the to-be-fed-back HARQ-ACK is greater than 1 and smaller than the maximum quantity of PDSCHs scheduled through one piece of DCI. When the quantity of PDSCHs scheduled through one piece of DCI is X, with respect to X PDSCHs, values of the HARQ-ACKs (X pieces of unknown information) are determined in accordance with a channel decoding result, and max_PDSCH-X HARQ-ACK feedback bits are filled with known information (N-X pieces of known information, e.g., NACK or ACK). Then, max_PDSCH pieces of HARQ-ACK information is bundled to N pieces of the to-be-fed-back HARQ-ACK information.

It should be appreciated that, the first parameter is obtained through one of the followings.

A11: the first parameter is configured by a network device.

Optionally, when a plurality of PDSCHs is scheduled through dynamic DCI and a bundling scheme is adopted, the first parameter is configured in a PDSCH parameter configuration through high-layer signaling (Radio Resource Control (RRC) message), and the first parameter is within a range of 1 to 8, or 1 to 16.

Further, it should be appreciated that, a value of the first parameter configured through the high-layer signaling should be smaller than or equal to max_PDSCH.

A12. The first parameter is agreed in a protocol.

The implementation complexity at the UE increases when the first parameter is flexibly configured in A11, so one or more values of the first parameter may be agreed in a protocol. For example, the first parameter is 1, max_PDSCH or min_PDSCH, where min_PDSCH represents the minimum quantity of PDSCHs in a multi-PDSCH scheduling time-domain information assignment table. Optionally, a value of min_PDSCH is greater than 1 or 2. For example, in Table 1, min_PDSCH=3.

In the case that the first parameter is 1, it is equivalent to that one piece of DCI is used for scheduling and the HARQ-ACK for one PDSCH is fed back. When a plurality of PDSCHs is scheduled through one piece of DCI and one PDSCH is decoded erroneously, NACK is fed back, and when all the scheduled PDSCHs are decoded correctly, ACK is fed back. This method is easy to be implemented, but invalid PDSCH retransmission occurs.

When the first parameter is max_PDSCH, it is equivalent to that no HARQ-ACK feedback bundling is performed.

When the first parameter is min_PDSCH, the feedback information corresponding to the PDSCHs needs to be bundled in accordance with the value of min_PDSCH.

A13: the first parameter is determined in accordance with the maximum quantity of PDSCHs scheduled through one piece of DCI.

It should be appreciated that, when a plurality of PDSCHs is scheduled through dynamic DCI and a non-bundling scheme is adopted, the value of the first parameter is determined by the UE itself in accordance with max_PDSCH.

Optionally, in this case, the UE obtains the maximum quantity of PDSCHs scheduled through one piece of DCI through one of the followings. A21: the maximum quantity of PDSCHs scheduled through one piece of DCI is configured by the network device. A21: the maximum quantity of PDSCHs scheduled through one piece of DCI is obtained from a PDSCH time-domain scheduling parameter table.

It should be appreciated that, in this case, the UE indirectly obtains max_PDSCH. Table 1 is a PDSCH time-domain scheduling parameter table.

Table 1: PDSCH time-domain scheduling parameter table

| Row index | PDSCH-1 | PDSCH-2 | PDSCH-3 | PDSCH-4 | PDSCH-5 | PDSCH-6 | PDSCH-7 | PDSCH-8 |
|---|---|---|---|---|---|---|---|---|
| 0 | S=2;L=12 K0=0 | | S=2;L=12 K0=2 | S=2;L=12 K0=3 | S=2;L=1 2 K0=4 | S=2;L=1 2 K0=5 | S=2;L=12 K0=6 | S=2;L=12 K0=7 |
| 1 | | | | | S=2;L=1 2 K0=4 | S=2;L=1 2 K0=5 | S=2;L=12 K0=6 | S=2;L=12 K0=7 |

(continued)

| Row index | PDSCH-1 | PDSCH-2 | PDSCH-3 | PDSCH-4 | PDSCH-5 | PDSCH-6 | PDSCH-7 | PDSCH-8 |
|---|---|---|---|---|---|---|---|---|
| 2 | | | | | | S=2;L=1 2 K0=5 | S=2;L=12 K0=6 | S=2;L=12 K0=7 |

In Table 1, for a row index 0, 7 schedulable PDSCHs are configured; for a row index 1, 4 schedulable PDSCHs are configured; and for a row index 2, 3 schedulable PDSCHs are configured. The UE may determine through calculation that max_PDSCH is 7.

Further, it should be appreciated that, Step S201 mainly includes Steps S2011 to S2013.

Step S2011: determining the quantity of bits of a first HARQ-ACK corresponding to first DCI in accordance with the first parameter.

It should be appreciated that, the first DCI is one or more pieces of DCI not detected by the UE. This step mainly aims to obtain the quantity of bits of the HARQ-ACKs corresponding to all pieces of undetected (or lost) DCI.

Step S2012: determining the quantity of bits of a second HARQ-ACK corresponding to a first TB in accordance with the first parameter and received TBs.

It should be appreciated that, the first TB includes one or more TBs received by the UE. This step mainly aims to obtain the quantity of bits of the second HARQ-ACK corresponding to all TBs received by the UE. The second HARQ-ACK mainly refers to information determined by the UE itself and unknown to the network device, and the second HARQ-ACK may also be understood as unknown information.

Step S2013: determining the control parameter for power control over the PUCCH in accordance with the quantity of bits of the first HARQ-ACK and the quantity of bits of the second HARQ-ACK.

The final control parameter may be obtained through adding the information obtained in the first two steps.

The implementation of Steps S2011 and S2012 will be described hereinafter in more details.

Optionally, Step S2011 mainly includes Steps S20111 and S20112.

Step S20111: determining the quantity of pieces of the first DCI.

Optionally, Step S20111 includes determining the quantity of pieces of the first DCI in accordance with $V_{\text{DAI},m_{\text{last}}}^{\text{DL}}$, $N_{\text{cells}}^{\text{DL}}$, and $U_{\text{DAI},c}$, where $V_{\text{DAI},m_{\text{last}}}^{\text{DL}}$ represents a value of a DAI of a last piece of DCI, $N_{\text{cells}}^{\text{DL}}$ represents the quantity of serving cells configured by a network device for the UE, and $U_{\text{DAI},c}$ represents teh quantity of pieces of received scheduling DCI.

To be specific, the quantity of pieces of the first DCI is determined through

$$\left(V_{\text{DAI},m_{\text{last}}}^{\text{DL}} - \sum_{c=0}^{N_{\text{cells}}^{\text{DL}}-1} U_{\text{DAI},c}\right) mod(T_D)$$

, where $T_D$ represents a maximum counting range of teh DAI.

Step S20112: determining the quantity of bits of the first HARQ-ACK corresponding to the first DCI in accordance with the quantity of pieces of the first DCI and the first parameter.

To be specific, it should be appreciated that, Step S20112 includes determining the quantity of bits of the first HARQ-ACK corresponding to the first DCI through $S \times N_{\text{TB,max}}^{\text{DL}} \times N$, where S represents the quantity of pieces of the first DCI, $N_{\text{TB,max}}^{\text{DL}}$ represents a maximum quantity of feedback bits of a PDSCH scheduled through the first DCI, and N represents the first parameter.

Here, it should be appreciated that, in a possible embodiment of the present disclosure, $N_{\text{TB,max}}^{\text{DL}}$ is 1 or 2.

It should be appreciated that, Step S2012 mainly includes Steps S20121 and S20122.

Step S20121: determining first information, the first information including at least one of the quantity of bits of a third HARQ-ACK to be fed back through each piece of scheduling DCI, or the quantity of bits of a fourth HARQ-ACK to be fed back for semi-persistently scheduling a plurality of PDSCHs in each cell. It should be appreciated that, the third HARQ-ACK is information determined by the UE and unknown to the network device, and the third HARQ-ACK may also be understood as unknown information.

To be specific, the scheduling DCI is DCI through which the HARQ-ACK needs to be fed back on the PUCCH, and the cell is a serving cell configured by the network device for the UE.

To be specific, the quantity of bits of the third HARQ-ACK to be fed back through each scheduling DCI si determined as follows. The quantity of bits of the third HARQ-ACK to be fed back through second DCI is determined in accordance with the first parameter and the quantity of pieces of target information scheduled through the second DCI, the second DCI is any scheduling DCI, and the target information includes an active PDSCH or an active TB.

Here, it should be appreciated that, the quantity of bits of the third HARQ-ACK to be fed back through the second DCI is determined using a function f (N, X), where N represents the first parameter, and X represents the quantity of pieces of target information scheduled through the DCI.

First circumstance: the quantity of pieces of target information is the quantity of active PDSCHs.

It should be appreciated that, this circumstance is adapted to any of the following configurations A11 and A12.

A11: single-codeword transmission (maxNrofCodeWordsScheduledByDCI=1) is configured by a base station, or the maximum quantity of codewords is not configured but the single-codeword transmission is adopted by the UE by default.

A12: multi-codeword transmission is configured by the base station, but a bundling operation needs to be performed between different TBs.

For example, when two-codeword transmission is configured by the base station, HARQ-ACK information for TB 1 and TB2 are bundled to one HARQ-ACK bit through a bit AND operation. For example, a parameter harq-ACK-SpatialBundlingPUCCH is configured by the base station.

Optionally, in this case, this step includes determining a smaller one of the first parameter and the quantity of active PDSCHs scheduled through the second DCI as the quantity of bits of the third HARQ-ACK to be fed back through the second DCI.

In other words, in this case, f (N, X) uses the following min (N, X) mode, where X represents the quantity of active PDSCHs scheduled through the DCI.

Min (N, X) mode

In this case, it is presumed that, for one piece of HARQ-ACK feedback information, the quantity of the bundled PDSCHs (or TBs) varies dynamically. In other words, when the quantity X of actually-scheduled active PDSCHs (or TBs) is greater than or equal to N, N pieces of HARQ-ACK information are always fed back. When the quantity X of actually-scheduled active PDSCHs (or TBs) is smaller than N, X pieces of active HARQ-ACK information are fed back. At this time, f(N,X) = min(N,X), where min() represents an operation for taking a minimum value. For example, when N=4 and X=3, f (N, X)=3. For another example, when N=4 and X=5, f (N, X)=4.

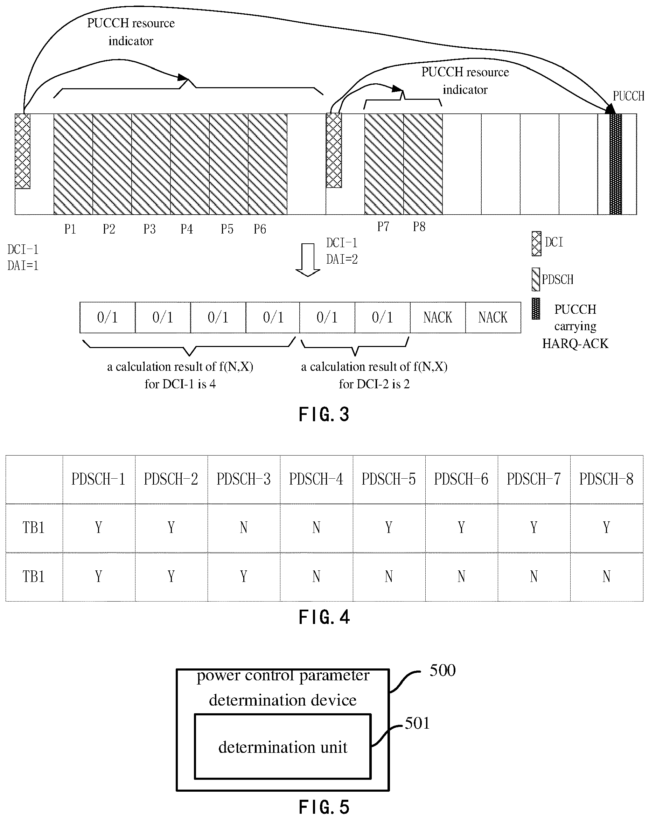

As shown in Fig. 3, it is presumed that a cell is configured by the network device (e.g., the base station), max_PDSCH=8, N=4, a plurality of PDSCHs is scheduled through DCI-1 and DCI-2, and through calculation in accordance with indication information, an uplink resource for indicating the to-be-fed-back HARQ-ACK is on a PUCCH resource. 6 PDSCHs are scheduled through DCI-1, so f (N,X)=4, and 2 PDSCHs are scheduled through DCI-2, so f (N,X)=2. Hence, a sum of the quantity of bits of the third HARQ-ACKs to be fed back through all the scheduling DCI is

$$\sum_{m=0}^{M-1} f(N, X) = 4 + 2 = 6$$

.

Second circumstance: the quantity of pieces of target information is the quantity of active TBs.

It should be appreciated that, this circumstance is adapted to the following configurations.

B21. Multi-codeword transmission is configured by the base station, and no bundling operation needs to be performed for the TBs between codewords.

Optionally, in this case, Step S20121 includes any of B31 or B32.

B31: determining the quantity of bits of a to-be-fed-back HARQ-ACK corresponding to each category of TBs scheduled through the second DCI in accordance with the first parameter and the quantity of active TBs scheduled through the second DCI, determining a sum of the quantities of bits of to-be-fed-back HARQ ACKs corresponding to all categories of TBs scheduled through the second DCI as the quantity of bits of the third HARQ-ACK to be fed back through the second DCI.

Each category of TBs corresponds to TBs having a same identifier for a plurality of PDSCHs scheduled through the second DCI. It should be appreciated that, the TB corresponding to each PDSCH is provided with a TB identifier. For example, in the case that two categories of TBs are scheduled through the second DCI, each PDSCH corresponds to a TB with an identifier first-TB (also considered as TB 1) and a TB with an identifier second-TB (also considered as TB2). The TBs with the identifier first-TB corresponding to different PDSCHs are considered as one category, and the TBs with the identifier second-TB corresponding to different PDSCHs are considered as another category.

In this case, f (N,X) adopts the following min(N,X) function method, where X represents the quantity of active PDSCHs scheduled through the DCI, and N represents the quantity of bits of the HARQ-ACK corresponding to one a TB for the PDSCH after the HARQ-ACK bundling (N is configured by the base station or indicated by default, e.g., information bits of the HARQ-ACK for two codewords include 2N bits). For different TBs, any one of B311 or B312 is adopted.

B311: determining the quantity of bits of the to-be-fed-back HARQ-ACK corresponding to each category of TBs through min (N,X). For example, in the case that two categories of TBs are scheduled through one piece of DCI, f(N,X)=min(N,X)+min(N,X), where min(N,X) represents the quantity of bits of the to-be-fed-back HARQ-ACK corresponding to TB1 or TB2 (i.e., the quantity of bits of the HARQ-ACK is not determined (ACK or NACK)). Here, it is presumed that, in the scheduling of one active PDSCH, at least one TB is transmitted (TB 1 and/or TB2 is enabled), and the quantity of TB 1 and the quantity of TB2 are equal to the quantity of scheduled active PDSCHs.

B312: determining the quantity of bits of the to-be-fed-back HARQ-ACK corresponding to an $i^{th}$ category of TBs through min (N,Xi), where N represents the first parameter, and $X_i$ represents the quantity of TBs in the $i^{th}$ category of TBs in an enabled state in the PDSCH scheduled through the second DCI.

For example, in the case that two categories of TBs are scheduled through one piece of DCI, f(N,X)=min( N,X1) + min(N,X2), where min(N,X1) represents the quantity of bits of the to-be-fed-back HARQ-ACK corresponding to TB 1 (i.e., the quantity of pieces of HARQ-ACK information is not determined (ACK or NACK)), X1 represents the quantity of TB1 in the enabled state in X scheduled PDSCHs, min(N,X2) represents the quantity of bits of the to-be-fed-back HARQ-ACK corresponding to TB2 (i.e., the quantity of pieces of HARQ-ACK information is not determined (ACK or NACK)), and X2 represents the quantity of TB2 in the enabled state in the X scheduled PDSCHs.

B32: determining the quantity of bits of to-be-fed-back HARQ-ACKs corresponding to all active TBs scheduled through the second DCI in accordance with the first parameter and the quantity of active TBs scheduled through the second DCI, and determining the quantity of bits of the to-be-fed-back HARQ-ACKs corresponding to through all the active TBs scheduled through the second DCI as the quantity of bits of the third HARQ-ACK to be fed back through the second DCI.

Optionally, this step includes determining the quantity of bits of the to-be-fed-back HARQ-ACKs corresponding to all active TBs scheduled through the second DCI through min (H×N, $\sum_{i=1}^{H} X_i$ ), where N represents teh first parameter, H represents the maximum quantity of categories of TBs allowed to be scheduled through the second DCI, and $X_i$ represents the quantity of TBs in an $i^{th}$ category of TBs in an enabled state in the PDSCH scheduled through the second DCI.

For example, in the case that two categories of TBs are scheduled through one piece of DCI, f(N,X)=min (2N, X1+X2), where min (2N, X1+X2) represents the quantity of bits of the to-be-fed-back HARQ-ACKs corresponding to TB1 and TB2 (i.e., the quantity of pieces of HARQ-ACK information is not determined (ACK or NACK)), X1 represents the quantity of TB 1 in the enabled state in X scheduled PDSCHs, and X2 represents the quantity of TB2 in the enabled state in the X scheduled PDSCHs.

As shown in Fig. 4, it is presumed that a cell is configured by the base station, max_PDSCH=8, N=4, and 7 PDSCHs are scheduled through one piece of DCI, i.e., the quantity of scheduled active PDSCHs is 7. The TBs in the enabled state determined by the UE in accordance with disabled TBs are shown in Fig. 4. TB 1 includes TBs corresponding to 6 PDSCHs, i.e., X1=6, and TB2 include TBs corresponding to 3 PDSCHs, i.e., X2=3. For the scheduling through the DCI, different results are obtained through different methods. To be specific, the quantity of bits of the third HARQ-ACK to be fed back through all the scheduling DCI is 8 when B311 is adopted, the quantity of bits of the third HARQ-ACK to be fed back through all the scheduling DCI is 7 when B312 is adopted, and the quantity of bits of the third HARQ-ACK to be fed back through all the scheduling DCI is 8 when B32 is adopted.

To be specific, the determining the quantity of bits of the fourth HARQ-ACK to be fed back for semi-persistent scheduling multi-PDSCH in each cell includes determining the quantity of bits of the fourth HARQ-ACK to be fed back for semi-persistent scheduling multi-PDSCH in each cell in accordance with the quantity of bits of an HARQ-ACK to be fed back in semi-persistent PDSCH scheduling in the case of single-codeword transmission as well as a second parameter, and the second parameter is the quantity of active PDSCHs actually transmitted in semi-static SPS transmission or the quantity of PDSCHs scheduled through an activation command when an SPS configuration is activated.

It should be appreciated that, due to an uplink/downlink time slot ratio, the quantity of PDSCHs issued through the activation command is different from the quantity of PDSCHs transmitted without PDSCH scheduling. For example, when the PDSCHs scheduled through the activation command include inactive PDSCHs caused by the overlapping of uplink symbols and there is no PDSCCH scheduling, the UE still considers that the time-domain scheduling information is valid.

Further, the determining the quantity of bits of the fourth HARQ-ACK to be fed back for semi-persistent scheduling multi-PDSCH in each cell in accordance with the quantity of bits of the HARQ-ACK to be fed back in semi-persistent PDSCH scheduling in the case of single-codeword transmission as well as the second parameter includes determining the quantity of bits of the fourth HARQ-ACK to be fed back for semi-persistent scheduling multi-PDSCH in each cell through min (N2, K), where N2 represents the quantity of bits of an HARQ-ACK to be fed back in semi-persistent PDSCH scheduling in the case of single-codeword transmission, and K represents the second parameter.

Step S20122: determining the quantity of bits of the second HARQ-ACIK corresponding to the first TB in accordance with the first information.

Based on the above, the control parameter is obtained through

$$n_{\text{HARQ-ACK,multi-pdsch}} = \left( \left( V_{\text{DAI},m_{\text{last}}}^{\text{DL}} - \sum_{c=0}^{N_{\text{cells}}^{\text{DL}}-1} U_{\text{DAI},c} \right) mod(T_D) \right) N_{\text{TB},max}^{\text{DL}} * \text{N} +$$

$$\sum_{c=0}^{N_{\text{cells}}^{\text{DL}}-1} \left( \sum_{m=0}^{M-1} \text{f}\left( \text{N}, \text{X} \right) + \sum_{i=0}^{SPS_{active}-1} N2_{\text{SPS\_multi-pdsch(i)},c} \right)$$ , where $n_{\text{HARQ-ACK,multi-pdsch}}$ represents the control parameter for power control over the PUCCH, N represents the first parameter, M represents the quantity of detection occasions of the PDCCH, $SPS_{active}$ represents teh quantity of active SPS configurations in an HARQ-ACK codebook transmitted on one PUCCH, and $N2_{\text{SPS\_multi-pdsch(i)},c}$ represents the quantity of bits of teh HARQ-ACK to be fed back for an $i^{\text{th}}$ SPS multi-PDSCH.

In the above formula, a part before a plus sign is called as part 1, and a part after the plus sign is called as part 2. Part 1 refers to the quantity of bits of the HARQ-ACK to be fed back through scheduling signaling DCI not detected by the UE, and part 2 refers to the quantity of information bits of unknown HARQ-ACK to be fed back through scheduling signaling DCI actually received by the UE and the SPS PDSCH (i.e., unknown information determined in accordance with a PDSCH decoding result or the other feedback, that is, information unknown to the base station, e.g., the base station configures two codewords for the UE, no bundling operation is performed on the HARQ-ACKs between the two codewords, and the maximum quantity of scheduled PDSCHs is 1; when DCI-1 indicates that merely one TB is transmitted (for example, when merely TB1 is transmitted, TB2 is disabled), the UE needs to feed back 2-bit information (b0, b1), where b0 is determined in accordance with a decoding result of TB1 and it is unknown to the base station, and b1 is NACK information filled by the UE and it is known to the base station; at this time, the quantity of bits calculated in part 2 is 1). Part 2 is equal to a sum of the quantity of bits of unknown information to be fed back through the multi-PDSCH dynamic scheduling DCI and the quantity of bits of unknown information to be fed back for SPS multi-PDSCH.

The quantity of bits of unknown information to be fed back through the multi-PDSCH dynamic scheduling DCI is calculated through f(N,X), and the quantity of bits of unknown information to be fed back for SPS multi-PDSCH is determined in accordance with a SPS PDSCH configuration and the quantity of PDSCHs actually scheduled during the activation.

In a word, the present disclosure provides a scheme for calculating the power control parameter for the PUCCH of an HARQ-ACK codebook when a plurality of PDSCHs is scheduled through one piece of DCI and the bundling operation is supported between the TBs and between the PDSCHs, to enable the UE to perform the power control in a better manner, thereby to maximize the power efficiency, i.e., meet the requirement on the PUCCH transmission power while reducing the power consumption.

It should be further appreciated that, in a scheduling cell configured by the base station for the UE, a scenario where one PDSCH is scheduled through one piece of DCI is configured, apart from a scenario where a plurality of PDSCHs is scheduled through one piece of DCI. At this time, when calculating the power control parameter $n_{\text{HARQ-ACK}}$ for the PUCCH, it is necessary to obtain a sum of the value $n_{\text{HARQ-ACK}}$ calculated in accordance with the single-PDSCH scheduling and the value $n_{\text{HARQ-ACK}}$ calculated in accordance with the multi-PDSCH scheduling. For example, $n_{\text{HARQ-ACK}}$ = $n_{\text{HARQ-ACK,TB}}$ + $n_{\text{HARQ-ACK,CBG}}$ + $n_{\text{HARQ-ACK,multi-pdsch}}$ , where first two terms of the formula represent calculation results obtained when one PDSCH is scheduled through one piece of DCI (when no CBG transmission is configured, a second term is 0 or not included in the formula), and $n_{\text{HARQ-ACK,multi-pdsch}}$ represents a calculation result obtained when a plurality of PDSCHs is scheduled through one piece of DCI.

Optionally, apart from being used for the dynamic HARQ-ACK codebook, the function f(N,X) is further used for calculating the power control parameter for the PUCCH of a static HARQ-ACK codebook.

For example, $$n_{\text{HARQ-ACK}} = \sum_{c=0}^{N_{cells}^{DL}-1} \sum_{m=0}^{M_c-1} N_{m,c}^{received} + \sum_{c=0}^{N_{cells}^{DL}-1} \sum_{m=0}^{M_c-1} N_{m,c}^{received,CBG}$$

$$+\sum_{c=0}^{N_{\text{cells}}^{\text{DL}}-1} \left( \sum_{m=0}^{M-1} \text{f}\left( \text{N}, X \right) + \sum_{i=0}^{SPS\_active} N2_{\text{SPS\_multi-pdsch(i)},c} \right)$$ , where the first two terms of teh formula represent calculation results obtained when one PDSCH is scheduled through one piece of DCI (when no CBG transmission is configured, a second term is 0 or not included in the formula), and

$$\sum_{c=0}^{N_{\text{cells}}^{\text{DL}}-1} \left( \sum_{m=0}^{M-1} \text{f}\left( \text{N}, X \right) + \sum_{i=0}^{SPS\_active} N2_{\text{SPS\_multi-pdsch(i)},c} \right)$$ represents a calculation result obtained when a plurality of PDSCHs is scheduled within a plurality of cells and a plurality of detection occasions.

Schemes in the embodiments of the present disclosure may be applied to various systems, especially a 5$^{\text{th}}$-Generation (5G) system, e.g., Global System of Mobile communication (GSM), Code Division Multiple Access (CDMA) system, Wideband Code Division Multiple Access (WCDMA) system, General Packet Radio Service (GPRS) system, Long Term Evolution (LTE) system, LTE Frequency Division Duplexing (FDD) system, LTE Time Division Duplexing (TDD) system, Long Term Evolution Advanced (LTE-A) system, Universal Mobile Telecommunication System (UMTS), Worldwide Interoperability for Microwave Access (WiMAX) system, or 5th-Generation (5G) New Radio (NR) system. Each of these systems includes a terminal device and a network device. Each system further includes a core network part, e.g., an Evolved Packet System (EPS) or 5G system (5GS).

The terminal device involved in the embodiments of the present disclosure is a device for providing voice data and/or any other service data to a user, e.g., a handheld device having a wireless connection function, or any other processing device capable of being connected to a wireless modem. In different systems, the terminal device may have different names. For example, in a 5G system, the terminal device is called as User Equipment (UE). A wireless terminal device communicates with one or more Core Networks (CNs) via a Radio Access Network (RAN). The wireless terminal device may be a mobile terminal, e.g., a mobile phone (or cellular phone), or a computer having the mobile terminal device, e.g., a portable, pocket-sized, handheld, built-in or vehicle-mounted mobile device, which are capable of exchanging voice and/or data with the RAN. For example, the wireless terminal device may be a Personal Communication Service (PCS) telephone, a cordless telephone, a Session Initiation Protocol (SIP) phone, a Wireless Local Loop (WLL) station, or a Personal Digital Assistant (PDA). In addition, the wireless terminal device may also be called as system, subscriber unit, subscriber station, mobile station, mobile, remote station, remote terminal, access terminal, user terminal, user agent or user device, which will not be particularly defined herein.

The network device involved in the embodiments of the present disclosure may be a base station which includes a plurality of cells providing services for the terminal. Depending on different application scenarios, the base station is called as an access point, a device in an access network in communication with the wireless terminal device through one or more sectors on an air interface, or any other name. The network device is used to exchange a received air frame with an Internet Protocol (IP) packet, and it serves as a router between the wireless terminal device and the other part of the access network. The other part of the access network includes an IP communication network. The network device may further coordinate attribute management on the air interface. For example, the network device involved in the embodiments of the present disclosure is a Base Transceiver Station (BTS) in the GSM or CDMA system, a NodeB in the WCDMA system, an evolutional Node B (eNB, or e-NodeB) in the LTE system, a 5G base station (gNB) in 5G network architecture (next generation system), a Home evolved Node B (HeNB), a relay node, a femto, or a pico, which will not be particularly defined herein. In some network structures, the network device includes a Centralized Unit (CU) and a Distributed Unit (DU), which may be geographically separated from each other.

Multi-Input Multi-Output (MIMO) transmission is performed between the network device and the terminal each with one or more antennae, and the MIMO transmission is Single User MIMO (SU-MIMO) or Multiple User MIMO (MU-MIMO). Depending on the form of an antenna combination and the quantity of antennae, the MIMO transmission may be 2D-MIMO, 3D-MIMO, FD-MIMO or massive-MIMO, and it may also be diversity transmission, precoding transmission or beam-forming transmission.

As shown in Fig. 5, the present disclosure provides in some embodiments a power control parameter determination device 500 applied to a UE, which includes a determination unit 501 configured to determine a control parameter for power control over a PUCCH in accordance with a first parameter. The first parameter is the quantity of bits of an HARQ-ACK for HARQ-ACK bundling in the case that a plurality of PDSCHs is scheduled through one piece of DCI.

Optionally, the determination unit 501 is configured to: determine the quantity of bits of a first HARQ-ACK corresponding to first DCI in accordance with the first parameter, the first DCI being one or more pieces of DCI not detected by the UE; determine the quantity of bits of a second HARQ-ACK corresponding to a first TB in accordance with the first parameter and received TBs, the first TB being one or more TBs received by the UE; and determine the control parameter for power control over the PUCCH in accordance with the quantity of bits of the first HARQ-ACK and the quantity of bits of the second HARQ-ACK.

Optionally, the determining the quantity of bits of the first HARQ-ACK corresponding to the first DCI in accordance with the first parameter includes: determining the quantity of pieces of the first DCI; and determining the quantity of bits of the first HARQ-ACK corresponding to the first DCI in accordance with the quantity of pieces of the first DCI and the first parameter.

Optionally, the determining the quantity of pieces of the first DCI includes determining the quantity of pieces of the first DCI in accordance with $V_{\mathrm{DAI},m_{\mathrm{last}}}^{\mathrm{DL}}$, $N_{\mathrm{cells}}^{\mathrm{DL}}$, and $U_{\mathrm{DAI},c}$, where $V_{\mathrm{DAI},m_{\mathrm{last}}}^{\mathrm{DL}}$ represents a value of a Downlink Assignment Index (DAI) of a last piece of DCI, $N_{\mathrm{cells}}^{\mathrm{DL}}$ represents the quantity of serving cells configured by a network device for the UE, and $U_{\mathrm{DAI},c}$ represents teh quantity of pieces of received scheduling DCI.

Optionally, the determining the quantity of bis of the first HARQ-ACK corresponding to the first DCI in accordance with the quantity of pieces of the first DCI and the first parameter includes determining the quantity of bits of the first HARQ-ACK corresponding to the first DCI through $S \times N_{TB,max}^{DL} \times N$ , where S represents the quantity of pieces of the first DCI, $N_{TB,max}^{DL}$ represents a maximum quantity of feedback bits of a PDSCH scheduled through the first DCI, and N represents the first parameter.

Optionally, the determining the quantity of bits of the second HARQ-ACI corresponding to the first TB in accordance with the first parameter and the received TBs includes: determining first information, the first information including at least one of the quantity of bits of a third HARQ-ACK to be fed back through each piece of scheduling DCI, or the quantity of bits of a fourth HARQ-ACK to be fed back for semi-persistently scheduling a plurality of PDSCHs in each cell, the scheduling DCI being DCI through which the HARQ-ACK needs to be fed back on the PUCCH, the cell being a serving cell configured by a network device for the UE; and determining the quantity of bits of the second HARQ-ACK corresponding to the first TB in accordance with the first information.

Optionally, the determining the quantity of bits of the third HARQ-ACK to be fed back through each piece of scheduling DCI includes determining the quantity of bits of the third HARQ-ACK to be fed back through second DCI in accordance with the first parameter and the quantity of pieces of target information scheduled through the second DCI, the second DCI is any scheduling DCI, and the target information includes an active PDSCH or an active TB.

Optionally, in the case that the target information is the active TB, the determining the quantity of bits of the third HARQ-ACK to be fed back through the second DCI in accordance with the first parameter and the quantity of pieces of target information scheduled through the second DCI includes any one of: determining the quantity of bits of a to-be-fed-back HARQ-ACK corresponding to each category of TBs scheduled through the second DCI in accordance with the first parameter and the quantity of active TBs scheduled through the second DCI, determining a sum of the quantities of bits of to-be-fed-back HARQ ACKs corresponding to all categories of TBs scheduled through the second DCI as the quantity of bits of the third HARQ-ACK to be fed back through the second DCI, each category of TBs corresponding to TBs having a same identifier for a plurality of PDSCHs scheduled through the second DCI; or determining the quantity of bits of to-be-fed-back HARQ-ACKs corresponding to all active TBs scheduled through the second DCI in accordance with the first parameter and the quantity of active TBs scheduled through the second DCI, and determining the quantity of bits of the to-be-fed-back HARQ-ACKs corresponding to through all the active TBs scheduled through the second DCI as the quantity of bits of the third HARQ-ACK to be fed back through the second DCI.

Optionally, the determining the quantity of bits of the to-be-fed-back HARQ-ACK corresponding to each category of TBs scheduled through the second DCI in accordance with the first parameter and the quantity of active TBs scheduled through the second DCI includes any one of: determining the quantity of bits of the to-be-fed-back HARQ-ACK corresponding to each category of TBs through min (N,X); or determining the quantity of bits of the to-be-fed-back HARQ-ACK corresponding to an $i^{th}$ category of TBs through min (N,Xi), where N represents the first parameter, X represents the quantity of active PDSCHs scheduled through the second DCI, and $X_i$ represents the quantity of TBs in the $i^{th}$ category of TBs in an enabled state in the PDSCH scheduled through the second DCI.

Optionally, the determining the quantity of bits of the to-be-fed-back HARQ-ACKs corresponding to all active TBs scheduled through the second DCI in accordance with the first parameter and the quantity of active TBs scheduled through the second DCI includes determining the quantity of bits of the to-be-fed-back HARQ-ACKs corresponding to all active TBs scheduled through the second DCI through min (H×N, $\sum_{i=1}^{H} X_i$ ), where N represents teh first parameter, H represents the maximum quantity of categories of TBs allowed to be scheduled through the second DCI, and $X_i$ represents the quantity of TBs in an $i^{th}$ category of TBs in an enabled state in the PDSCH scheduled through the second DCI.

Optionally, the determining the quantity of bits of the fourth HARQ-ACK to be fed back for semi-persistent scheduling multi-PDSCH in each cell includes determining the quantity of bits of the fourth HARQ-ACK to be fed back for semi-persistent scheduling multi-PDSCH in each cell in accordance with the quantity of bits of an HARQ-ACK to be fed back in semi-persistent PDSCH scheduling in the case of single-codeword transmission as well as a second parameter, and the second parameter is the quantity of active PDSCHs actually transmitted in semi-static SPS transmission or the quantity of PDSCHs scheduled through an activation command when an SPS configuration is activated.

Optionally, the determining the quantity of bits of the fourth HARQ-ACK to be fed back for semi-persistent scheduling multi-PDSCH in each cell in accordance with the quantity of bits of the HARQ-ACK to be fed back in semi-persistent PDSCH scheduling in the case of single-codeword transmission as well as the second parameter includes determining the quantity of bits of the fourth HARQ-ACK to be fed back for semi-persistent scheduling multi-PDSCH in each cell through min (N2, K), where N2 represents the quantity of bits of an HARQ-ACK to be fed back in semi-persistent PDSCH scheduling in the case of single-codeword transmission, and K represents the second parameter.

Optionally, the first parameter is configured by a network device, agreed in a protocol, or determined in accordance with the maximum quantity of PDSCHs scheduled through one piece of DCI.

Optionally, a value of the first parameter is smaller than or equal to the maximum quantity of PDSCHs scheduled through one piece of DCI.

Optionally, when the first parameter is determined in accordance with the maximum quantity of PDSCHs scheduled through one piece of DCI, the maximum quantity of PDSCHs scheduled through one piece of DCI is configured by the network device, or obtained from a PDSCH time-domain scheduling parameter table.

It should be appreciated that, the device in the embodiments of the present disclosure further includes a transceiver unit configured to receive and transmit data.

It should be appreciated that, the above-mentioned device correspond to the above-mentioned method, and the implementation of the device may refer to that of the above-mentioned method with a same technical effect.

It should be appreciated that, the modules (units) in the embodiments of the present disclosure are for illustrative purposes, and they are provided merely on the basis of their logic functions. The modules may be integrated in a processing module, or physically separated from each other, or two or more modules may be integrated in one module. The integrated modules may be implemented in the form of hardware or a software functional module.

In the case that the functional modules are implemented in a software form and sold or used as a separate product, they may be stored in a computer-readable medium. Based on this, the technical solutions of the present disclosure, partial or full, or parts of the technical solutions of the present disclosure contributing to the related art, may appear in the form of software products, which may be stored in a storage medium and include several instructions to enable computer equipment (a personal computer, a server or network equipment) to execute all or parts of the steps of the method according to the embodiments of the present disclosure. The storage medium includes any medium capable of storing therein program codes, e.g., a universal serial bus (USB) flash disk, a mobile hard disk (HD), a read-only memory (ROM), a random access memory (RAM), a magnetic disk or an optical disk.

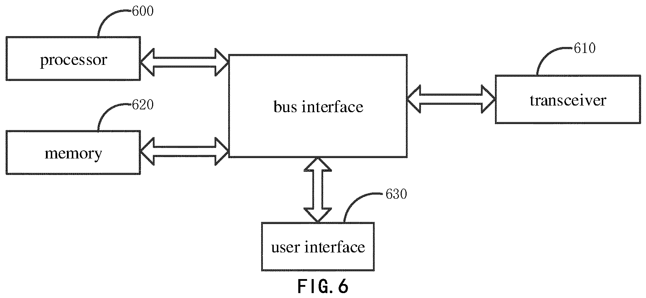

As shown in Fig. 6, the present disclosure further provides in some embodiments a UE, which includes a processor 600, a transceiver 610, a memory 620, and a program stored in the memory 620 and executed by the processor 600. The transceiver 610 is coupled to the processor 600 and the memory 620 through a bus interface. The processor 600 is configured to read the program in the memory, to determine a control parameter for power control over a PUCCH in accordance with a first parameter. The first parameter is the quantity of bits of an HARQ-ACK for HARQ-ACK bundling in the case that a plurality of PDSCHs is scheduled through one piece of DCI. The transceiver 610 is configured to receive and transmit data under the control of the processor 600.

In Fig. 6, bus architecture may include a number of buses and bridges connected to each other, to connect various circuits for one or more processors 600 and one or more memories 620. In addition, as is known in the art, the bus architecture may be used to connect any other circuits, such as a circuit for a peripheral device, a circuit for a voltage stabilizer and a power management circuit. The bus interface may be provided, and the transceiver 610 may consist of a plurality of elements, i.e., a transmitter and a receiver for communication with any other devices over a transmission medium. The transmission medium includes a wireless channel, a wired channel, or an optical cable. With respect to different UEs, a user interface 630 may also be provided for devices which are to be arranged inside or outside the UE, and these devices may include but not limited to a keypad, a display, a speaker, a microphone and a joystick.

The processor 600 may take charge of managing the bus architecture as well as general processings. The memory 620 may store therein data for the operation of the processor 600.

Optionally, the processor 600 is a Central Processing Unit (CPU), an Application Specific Integrated Circuit (ASIC), a Field-Programmable Gate Array (FPGA) or a Complex Programmable Logic Device (CPLD). The processor may also use multi-core architecture.

The processor is configured to call the computer program in the memory, to implement the above-mentioned method in accordance with obtained executable instructions. The processor may also be physically separated from the memory.

Optionally, the processor is configured to read the computer program in the memory to: determine the quantity of bits of a first HARQ-ACK corresponding to first DCI in accordance with the first parameter, the first DCI being one or more pieces of DCI not detected by the UE; determine the quantity of bits of a second HARQ-ACK corresponding to a first TB in accordance with the first parameter and received TBs, the first TB being one or more TBs received by the UE; and determine the control parameter for power control over the PUCCH in accordance with the quantity of bits of the first HARQ-ACK and the quantity of bits of the second HARQ-ACK.

Optionally, the processor is configured to read the computer program in the memory, to: determine the quantity of pieces of the first DCI; and determine the quantity of bits of the first HARQ-ACK corresponding to the first DCI in accordance with the quantity of pieces of the first DCI and the first parameter.

Optionally, the processor is configured to read the computer program in the memory, to determine the quantity of pieces of the first DCI in accordance with $V_{\mathrm{DAI},m_{\mathrm{last}}}^{\mathrm{DL}}$, $N_{\mathrm{cells}}^{\mathrm{DL}}$, and $U_{\mathrm{DAI},c}$, where $V_{\mathrm{DAI},m_{\mathrm{last}}}^{\mathrm{DL}}$ represents a value of a Downlink Assignment Index (DAI) of a last piece of DCI, $N_{\text{cells}}^{\text{DL}}$ represents the quantity of serving cells configured by a network device for the UE, and $U_{\text{DAI},c}$ represents teh quantity of pieces of received scheduling DCI.

Optionally, the processor is configured to read the computer program in the memory to determine the quantity of bits of the first HARQ-ACK corresponding to the first DCI through $S \times N_{\text{TB,max}}^{\text{DL}} \times \text{N}$ , where S represents the quantity of pieces of the first DCI, $N_{\text{TB,max}}^{\text{DL}}$ represents a maximum quantity of feedback bits of a PDSCH scheduled through the first DCI, and N represents the first parameter.

Optionally, the processor is configured to read the computer program in the memory, to: determine first information, the first information including at least one of the quantity of bits of a third HARQ-ACK to be fed back through each piece of scheduling DCI, or the quantity of bits of a fourth HARQ-ACK to be fed back for semi-persistently scheduling a plurality of PDSCHs in each cell, the scheduling DCI being DCI through which the HARQ-ACK needs to be fed back on the PUCCH, the cell being a serving cell configured by a network device for the UE; and determine the quantity of bits of the second HARQ-ACK corresponding to the first TB in accordance with the first information.

Optionally, the processor is configured to read the computer program in the memory, to determine the quantity of bits of the third HARQ-ACK to be fed back through second DCI in accordance with the first parameter and the quantity of pieces of target information scheduled through the second DCI, the second DCI is any scheduling DCI, and the target information includes an active PDSCH or an active TB.

Optionally, in the case that the target information is the active TB, the processor is configured to read the computer program in the memory, to perform any one of: determining the quantity of bits of a to-be-fed-back HARQ-ACK corresponding to each category of TBs scheduled through the second DCI in accordance with the first parameter and the quantity of active TBs scheduled through the second DCI, determining a sum of the quantities of bits of to-be-fed-back HARQ ACKs corresponding to all categories of TBs scheduled through the second DCI as the quantity of bits of the third HARQ-ACK to be fed back through the second DCI, each category of TBs corresponding to TBs having a same identifier for a plurality of PDSCHs scheduled through the second DCI; or determining the quantity of bits of to-be-fed-back HARQ-ACKs corresponding to all active TBs scheduled through the second DCI in accordance with the first parameter and the quantity of active TBs scheduled through the second DCI, and determining the quantity of bits of the to-be-fed-back HARQ-ACKs corresponding to through all the active TBs scheduled through the second DCI as the quantity of bits of the third HARQ-ACK to be fed back through the second DCI.

Optionally, the processor is configured to read the computer program in the memory to perform any one of: determining the quantity of bits of the to-be-fed-back HARQ-ACK corresponding to each category of TBs through min (N,X); or determining the quantity of bits of the to-be-fed-back HARQ-ACK corresponding to an $i^{\text{th}}$ category of TBs through min (N,$X_i$), where N represents the first parameter, X represents the quantity of active PDSCHs scheduled through the second DCI, and $X_i$ represents the quantity of TBs in the $i^{\text{th}}$ category of TBs in an enabled state in the PDSCH scheduled through the second DCI.

Optionally, the processor is configured to read the computer program in the memory, to determine the quantity of bits of the to-be-fed-back HARQ-ACKs corresponding to all active TBs scheduled through the second DCI through min (H×N, $\sum_{i=1}^{H} X_i$ ), where N represents the first parameter, H represents the maximum quantity of categories of TBs allowed to be scheduled through the second DCI, and $X_i$ represents the quantity of TBs in an $i^{\text{th}}$ category of TBs in an enabled state in the PDSCH scheduled through the second DCI.

Optionally, the processor is configured to read the computer program in the memory, to determine the quantity of bits of the fourth HARQ-ACK to be fed back for semi-persistent scheduling multi-PDSCH in each cell in accordance with the quantity of bits of an HARQ-ACK to be fed back in semi-persistent PDSCH scheduling in the case of single-codeword transmission as well as a second parameter, and the second parameter is the quantity of active PDSCHs actually transmitted in semi-static SPS transmission or the quantity of PDSCHs scheduled through an activation command when an SPS configuration is activated.

Optionally, the processor is configured to read the computer program in the memory, to determine the quantity of bits of the fourth HARQ-ACK to be fed back for semi-persistent scheduling multi-PDSCH in each cell through min (N2, K), where N2 represents the quantity of bits of an HARQ-ACK to be fed back in semi-persistent PDSCH scheduling in the case of single-codeword transmission, and K represents the second parameter.

Optionally, the first parameter is configured by a network device, agreed in a protocol, or determined in accordance with the maximum quantity of PDSCHs scheduled through one piece of DCI.

Optionally, a value of the first parameter is smaller than or equal to the maximum quantity of PDSCHs scheduled through one piece of DCI.

Optionally, when the first parameter is determined in accordance with the maximum quantity of PDSCHs scheduled through one piece of DCI, the maximum quantity of PDSCHs scheduled through one piece of DCI is configured by the network device, or obtained from a PDSCH time-domain scheduling parameter table.

It should be appreciated that, the UE in the embodiments of the present disclosure is used to implement the steps of the above-mentioned method with a same technical effect, which will not be particularly defined herein.

The present disclosure further provides in some embodiments a computer-readable storage medium storing therein a computer program. The computer program is executed by a processor to implement the steps of the report processing method for the network node (the first network node). The computer-readable storage medium is any available medium or data storage device capable of being accessed by the processor, which includes, but not limited to, a magnetic memory (e.g., floppy disk, hard disk, magnetic tape, or Magnetic Optical disk (MO)), an optical memory (e.g., Compact Disk (CD), Digital Versatile Disk (DVD), Blue-ray Disk (BD), or High-definition Versatile Disk (HVD)), or a semiconductor memory (e.g., Read-Only Memory (ROM), Electrically Programmable ROM (EPROM), Electrically Erasable PROM (EEPROM), NAND flash, or Solid-State Disk or Solid State Drive (SSD)).

It should be appreciated that, the present disclosure may be provided as a method, a system or a computer program product, so the present disclosure may be in the form of full hardware embodiments, full software embodiments, or combinations thereof. In addition, the present disclosure may be in the form of a computer program product implemented on one or more computer-readable storage mediums (including but not limited to disk memory and optical memory) including computer-readable program codes.

The present disclosure has been described with reference to the flow charts and/or block diagrams of the method, device (system) and computer program product according to the embodiments of the present disclosure. It should be understood that computer program instructions may be used to implement each of the work flows and/or blocks in the flow charts and/or the block diagrams, and the combination of the work flows and/or blocks in the flow charts and/or the block diagrams. These computer program instructions may be provided to a processor of a common computer, a dedicated computer, an embedded processor or any other programmable data processing devices to create a machine, so that instructions capable of being executed by the processor of the computer or the other programmable data processing devices may create a device to achieve the functions assigned in one or more work flows in the flow chart and/or one or more blocks in the block diagram.

These computer program instructions may also be stored in a computer readable storage that may guide the computer or the other programmable data process devices to function in a certain way, so that the instructions stored in the computer readable storage may create a product including an instruction unit which achieves the functions assigned in one or more flows in the flow chart and/or one or more blocks in the block diagram.

These computer program instructions may also be loaded in the computer or the other programmable data process devices, so that a series of operation steps are executed on the computer or the other programmable devices to create processes achieved by the computer. Therefore, the instructions executed in the computer or the other programmable devices provide the steps for achieving the function assigned in one or more flows in the flow chart and/or one or more blocks in the block diagram.

It should be further appreciated that, the above modules in the network device and the UE are divided merely on the basis of their logic functions, and in actual use, they may be completely or partially integrated into a physical entity, or physically separated from each other. These modules may be implemented by calling software through a processing element, or implemented in the form of hardware. For example, the determination module may be a processing element arranged separately, or integrated into a chip of the above-mentioned device. In addition, the determination module may be stored in the memory of the above-mentioned device in the form of a program code, and may be called and executed by a processing element of the above-mentioned device to achieve the above functions. The other modules may be implemented in a similar manner. All or parts of the modules may be integrated together or arranged separately. Here, the modules, units or assemblies may each of an Integrated Circuit (IC) having a signal processing capability. During the implementation, the steps of the method or the modules may be implemented through an integrated logic circuit of the processing element in the form of hardware or through instructions in the form of software.

For example, the above modules, units, sub-units or sub-modules may be one or more ICs capable of implementing the above-mentioned method, e.g., one or more Application Specific Integrated Circuits (ASICs), one or more Digital Signal Processors (DSPs), or one or more Field Programmable Gate Array (FPGA). For another example, when a certain module is implemented by calling a program code through a processing element, the processing element may be a general-purpose processor, e.g., a Central Processing Unit (CPU) or any other processor capable of calling the program code. These modules may be integrated together and implemented in the form of system-on-a-chip (SOC).

Such words as "first" and "second" involved in the specification and the appended claims are merely used to differentiate different objects rather than to represent any specific order. It should be appreciated that, the data used in this way may be replaced with each other, to implement the embodiments in an order other than that shown in the drawings or described in the specification. In addition, such terms as "include" or "including" or any other variations involved in the present disclosure intend to provide non-exclusive coverage, so that a procedure, method, system, product or device including a series of steps or units may also include any other elements not listed herein, or may include any inherent steps or units of the procedure, method, system, product or device. The expression "and/or" in the description and the appended claims is merely used to represent at least one of the objects before and after the expression. For example, "A and/or B and/or C" represents seven situations, i.e., there is only A, there is only B, there is only C, there are both A and B, there are both B and C, there are both A and C, and there are A, B and C. Similarly, the phrase "at least one of A or B" in the specification and the appended claims shall be understood as "there is only A, there is only B, or there are both A and B".

The above embodiments are for illustrative purposes only, but the present disclosure is not limited thereto. Obviously, a person skilled in the art may make further modifications and improvements without departing from the spirit of the present disclosure, and these modifications and improvements shall also fall within the scope of the present disclosure.

**Claims**

1. A power control parameter determination method, comprising determining a control parameter for power control over a Physical Uplink Control Channel (PUCCH) in accordance with a first parameter, wherein the first parameter is a quantity of bits of a Hybrid Automatic Repeat reQuest Acknowledge (HARQ-ACK) for HARQ-ACK bundling in the case that a plurality of Physical Downlink Shared Channels (PDSCHs) is scheduled through one piece of Downlink Control Information (DCI).

2. The power control parameter determination method according to claim 1, wherein the determining the control parameter for power control over the PUCCH in accordance with the first parameter comprises:

   determining the quantity of bits of a first HARQ-ACK corresponding to first DCI in accordance with the first parameter, the first DCI being one or more pieces of DCI not detected by a User Equipment (UE);
   determining the quantity of bits of a second HARQ-ACK corresponding to a first Transport Block (TB) in accordance with the first parameter and received TBs, the first TB being one or more TBs received by the UE; and
   determining the control parameter for power control over the PUCCH in accordance with the quantity of bits of the first HARQ-ACK and the quantity of bits of the second HARQ-ACK.

3. The power control parameter determination method according to claim 2, wherein the determining the quantity of bits of the first HARQ-ACK corresponding to the first DCI in accordance with the first parameter comprises:

   determining the quantity of pieces of the first DCI; and
   determining the quantity of bits of the first HARQ-ACK corresponding to the first DCI in accordance with the quantity of pieces of the first DCI and the first parameter.

4. The power control parameter determination method according to claim 3, wherein the determining the quantity of pieces of the first DCI comprises determining the quantity of pieces of the first DCI in accordance with $V_{\mathrm{DAI},m_{\mathrm{last}}}^{\mathrm{DL}}$, $N_{\mathrm{cells}}^{\mathrm{DL}}$, and $U_{\mathrm{DAI},c}$, wherein $V_{\mathrm{DAI},m_{\mathrm{last}}}^{\mathrm{DL}}$ represents a value of a Downlink Assignment Index (DAI) of a last piece of DCI, $N_{\mathrm{cells}}^{\mathrm{DL}}$ represents a quantity of serving cells configured by a network device for the UE, and $U_{\mathrm{DAI},c}$ represents a quantity of pieces of received scheduling DCI.

5. The power control parameter determination method according to claim 3, wherein the determining the quantity of bis of the first HARQ-ACK corresponding to the first DCI in accordance with the quantity of pieces of the first DCI and the first parameter comprises: determining the quantity of bits of the first HARQ-ACK corresponding to the first DCI through $S \times N_{\mathrm{TB,max}}^{\mathrm{DL}} \times \mathrm{N}$, wherein S represents the quantity of pieces of the first DCI, $N_{\mathrm{TB,max}}^{\mathrm{DL}}$ represents a maximum quantity of feedback bits of a PDSCH scheduled through the first DCI, and N represents the first parameter.

6. The power control parameter determination method according to claim 2, wherein the determining the quantity of bits of the second HARQ-ACI corresponding to the first TB in accordance with the first parameter and the received TBs comprises:

determining first information, the first information comprising at least one of a quantity of bits of a third HARQ-ACK to be fed back through each piece of scheduling DCI, or the quantity of bits of a fourth HARQ-ACK to be fed back for semi-persistently scheduling a plurality of PDSCHs in each cell, the scheduling DCI being DCI through which the HARQ-ACK needs to be fed back on the PUCCH, the cell being a serving cell configured by a network device for the UE; and

determining the quantity of bits of the second HARQ-ACK corresponding to the first TB in accordance with the first information.

7. The power control parameter determination method according to claim 6, wherein the determining the quantity of bits of the third HARQ-ACK to be fed back through each piece of scheduling DCI comprises: determining the quantity of bits of the third HARQ-ACK to be fed back through second DCI in accordance with the first parameter and the quantity of pieces of target information scheduled through the second DCI, the second DCI is any scheduling DCI, and the target information comprises an active PDSCH or an active TB.

8. The power control parameter determination method according to claim 7, wherein in the case that the target information is the active TB, the determining the quantity of bits of the third HARQ-ACK to be fed back through the second DCI in accordance with the first parameter and the quantity of pieces of target information scheduled through the second DCI comprises any one of:

determining the quantity of bits of a to-be-fed-back HARQ-ACK corresponding to each category of TBs scheduled through the second DCI in accordance with the first parameter and the quantity of active TBs scheduled through the second DCI, and determining a sum of the quantities of bits of to-be-fed-back HARQ ACKs corresponding to all categories of TBs scheduled through the second DCI as the quantity of bits of the third HARQ-ACK to be fed back through the second DCI, each category of TBs corresponding to TBs having a same identifier for a plurality of PDSCHs scheduled through the second DCI; or

determining the quantity of bits of to-be-fed-back HARQ-ACKs corresponding to all active TBs scheduled through the second DCI in accordance with the first parameter and the quantity of active TBs scheduled through the second DCI, and determining the quantity of bits of the to-be-fed-back HARQ-ACKs corresponding to through all the active TBs scheduled through the second DCI as the quantity of bits of the third HARQ-ACK to be fed back through the second DCI.

9. The power control parameter determination method according to claim 8, wherein the determining the quantity of bits of the to-be-fed-back HARQ-ACK corresponding to each category of TBs scheduled through the second DCI in accordance with the first parameter and the quantity of active TBs scheduled through the second DCI comprises any one of:

determining the quantity of bits of the to-be-fed-back HARQ-ACK corresponding to each category of TBs through min (N,X); or

determining the quantity of bits of the to-be-fed-back HARQ-ACK corresponding to an $i^{th}$ category of TBs through min (N,Xi),

wherein N represents the first parameter, X represents the quantity of active PDSCHs scheduled through the second DCI, and $X_i$ represents the quantity of TBs in the $i^{th}$ category of TBs in an enabled state in the PDSCH scheduled through the second DCI.

10. The power control parameter determination method according to claim 8, wherein the determining the quantity of bits of the to-be-fed-back HARQ-ACKs corresponding to all active TBs scheduled through the second DCI in accordance with the first parameter and the quantity of active TBs scheduled through the second DCI comprises determining the quantity of bits of the to-be-fed-back HARQ-ACKs corresponding to all active TBs scheduled through the second DCI through min (H×N, $\sum_{i=1}^{H} X_i$), wherein N represents teh first parameter, H represents the maximum quantity of categories of TBs allowed to be scheduled through the second DCI, and $X_i$ represents the quantity of TBs in an $i^{th}$ category of TBs in an enabled state in the PDSCH scheduled through the second DCI.

11. The power control parameter determination method according to claim 6, wherein the determining the quantity of bits of the fourth HARQ-ACK to be fed back for semi-persistent scheduling multi-PDSCH in each cell comprises determining the quantity of bits of the fourth HARQ-ACK to be fed back for semi-persistent scheduling multi-PDSCH in each cell in accordance with the quantity of bits of an HARQ-ACK to be fed back in semi-persistent PDSCH scheduling in the case of single-codeword transmission as well as a second parameter, and the second parameter is the quantity of active PDSCHs actually transmitted in semi-static Semi-persistent Scheduling (SPS) transmission or the quantity of PDSCHs scheduled through an activation command when an SPS configuration is activated.

12. The power control parameter determination method according to claim 11, wherein the determining the quantity of bits of the fourth HARQ-ACK to be fed back for semi-persistent scheduling multi-PDSCH in each cell in accordance with the quantity of bits of the HARQ-ACK to be fed back in semi-persistent PDSCH scheduling in the case of single-codeword transmission as well as the second parameter comprises determining the quantity of bits of the fourth HARQ-ACK to be fed back for semi-persistent scheduling multi-PDSCH in each cell through min (N2, K), where N2 represents the quantity of bits of an HARQ-ACK to be fed back in semi-persistent PDSCH scheduling in the case of single-codeword transmission, and K represents the second parameter.

13. The power control parameter determination method according to claim 1, wherein the first parameter is configured by a network device, agreed in a protocol, or determined in accordance with the maximum quantity of PDSCHs scheduled through one piece of DCI.

14. The power control parameter determination method according to claim 13, wherein a value of the first parameter is smaller than or equal to the maximum quantity of PDSCHs scheduled through one piece of DCI.

15. The power control parameter determination method according to claim 13, wherein when the first parameter is determined in accordance with the maximum quantity of PDSCHs scheduled through one piece of DCI, the maximum quantity of PDSCHs scheduled through one piece of DCI is configured by the network device, or obtained from a PDSCH time-domain scheduling parameter table.

16. A User Equipment (UE), comprising a memory, a transceiver and a processor,

wherein the memory is configured to store therein a computer program, the transceiver is configured to receive and transmit data under the control of the processor, and the processor is configured to read the computer program in the memory to determine a control parameter for power control over a Physical Uplink Control Channel (PUCCH) in accordance with a first parameter,
wherein the first parameter is the quantity of bits of a Hybrid Automatic Repeat reQuest Acknowledge (HARQ-ACK) for HARQ-ACK bundling in the case that a plurality of Physical Downlink Shared Channels (PDSCHs) is scheduled through one piece of Downlink Control Information (DCI).

17. The UE according to claim 16, wherein the processor is configured to read the computer program in the memory to:

determine the quantity of bits of a first HARQ-ACK corresponding to first DCI in accordance with the first parameter, the first DCI being one or more pieces of DCI not detected by the UE;
determine the quantity of bits of a second HARQ-ACK corresponding to a first Transport Block (TB) in accordance with the first parameter and received TBs, the first TB being one or more TBs received by the UE; and
determine the control parameter for power control over the PUCCH in accordance with the quantity of bits of the first HARQ-ACK and the quantity of bits of the second HARQ-ACK.

18. The UE according to claim 17, wherein the processor is configured to read the computer program in the memory, to:

determine the quantity of pieces of the first DCI; and
determine the quantity of bits of the first HARQ-ACK corresponding to the first DCI in accordance with the quantity of pieces of the first DCI and the first parameter.

19. The UE according to claim 18, wherein the processor is configured to read the computer program in the memory,

to determine the quantity of pieces of the first DCI in accordance with $V_{\mathrm{DAI},m_{\mathrm{last}}}^{\mathrm{DL}}$, $N_{\mathrm{cells}}^{\mathrm{DL}}$, and $U_{\mathrm{DAI},c}$, where $V_{\mathrm{DAI},m_{\mathrm{last}}}^{\mathrm{DL}}$ represents a value of a Downlink Assignment Index (DAI) of a last piece of DCI, $N_{\mathrm{cells}}^{\mathrm{DL}}$ represents the quantity of serving cells configured by a network device for the UE, and $U_{\mathrm{DAI},c}$ represents teh quantity of pieces of received scheduling DCI.

20. The UE according to claim 18, wherein the processor is configured to read the computer program in the memory to determine the quantity of bits of the first HARQ-ACK corresponding to the first DCI through $S \times N_{\text{TB,max}}^{\text{DL}} \times N$, where S represents the quantity of pieces of the first DCI, $N_{\text{TB,max}}^{\text{DL}}$ represents a maximum quantity of feedback bits of a PDSCH scheduled through the first DCI, and N represents the first parameter.

21. The UE according to claim 17, wherein the processor is configured to read the computer program in the memory, to:

    determine first information, the first information comprising at least one of the quantity of bits of a third HARQ-ACK to be fed back through each piece of scheduling DCI, or the quantity of bits of a fourth HARQ-ACK to be fed back for semi-persistently scheduling a plurality of PDSCHs in each cell, the scheduling DCI being DCI through which the HARQ-ACK needs to be fed back on the PUCCH, the cell being a serving cell configured by a network device for the UE; and
    determine the quantity of bits of the second HARQ-ACK corresponding to the first TB in accordance with the first information.

22. The UE according to claim 21, wherein the processor is configured to read the computer program in the memory, to determine the quantity of bits of the third HARQ-ACK to be fed back through second DCI in accordance with the first parameter and the quantity of pieces of target information scheduled through the second DCI, the second DCI is any scheduling DCI, and the target information comprises an active PDSCH or an active TB.

23. The UE according to claim 22, wherein in the case that the target information is the active TB, the processor is configured to read the computer program in the memory, to perform any one of:

    determining the quantity of bits of a to-be-fed-back HARQ-ACK corresponding to each category of TBs scheduled through the second DCI in accordance with the first parameter and the quantity of active TBs scheduled through the second DCI, and determining a sum of the quantities of bits of to-be-fed-back HARQ ACKs corresponding to all categories of TBs scheduled through the second DCI as the quantity of bits of the third HARQ-ACK to be fed back through the second DCI, each category of TBs corresponding to TBs having a same identifier for a plurality of PDSCHs scheduled through the second DCI; or
    determining the quantity of bits of to-be-fed-back HARQ-ACKs corresponding to all active TBs scheduled through the second DCI in accordance with the first parameter and the quantity of active TBs scheduled through the second DCI, and determining the quantity of bits of the to-be-fed-back HARQ-ACKs corresponding to through all the active TBs scheduled through the second DCI as the quantity of bits of the third HARQ-ACK to be fed back through the second DCI.

24. The UE according to claim 23, wherein the processor is configured to read the computer program in the memory to perform any one of:

    determining the quantity of bits of the to-be-fed-back HARQ-ACK corresponding to each category of TBs through min (N,X); or
    determining the quantity of bits of the to-be-fed-back HARQ-ACK corresponding to an $i^{\text{th}}$ category of TBs through min (N,Xi), where N represents the first parameter, X represents the quantity of active PDSCHs scheduled through the second DCI;
    wherein $X_i$ represents the quantity of TBs in the $i^{\text{th}}$ category of TBs in an enabled state in the PDSCH scheduled through the second DCI.

25. The UE according to claim 23, wherein the processor is configured to read the computer program in the memory, to determine the quantity of bits of the to-be-fed-back HARQ-ACKs corresponding to all active TBs scheduled through the second DCI through min (H$\times$N, $\sum_{i=1}^{H} X_i$), where N represents teh first parameter, H represents the maximum quantity of categories of TBs allowed to be scheduled through the second DCI, and $X_i$ represents the quantity of TBs in an $i^{\text{th}}$ category of TBs in an enabled state in the PDSCH scheduled through the second DCI.

26. The UE according to claim 21, wherein the processor is configured to read the computer program in the memory, to determine the quantity of bits of the fourth HARQ-ACK to be fed back for semi-persistent scheduling multi-PDSCH in each cell in accordance with the quantity of bits of an HARQ-ACK to be fed back in semi-persistent PDSCH scheduling in the case of single-codeword transmission as well as a second parameter, and the second parameter is the quantity of active PDSCHs actually transmitted in semi-static Semi-persistent Scheduling (SPS) transmission or the quantity of PDSCHs scheduled through an activation command when an SPS configuration is activated.

27. The UE according to claim 26, wherein the processor is configured to read the computer program in the memory, to determine the quantity of bits of the fourth HARQ-ACK to be fed back for semi-persistent scheduling multi-PDSCH in each cell through min (N2, K), where N2 represents the quantity of bits of an HARQ-ACK to be fed back in semi-persistent PDSCH scheduling in the case of single-codeword transmission, and K represents the second parameter.

28. The UE according to claim 16, wherein the first parameter is configured by a network device, agreed in a protocol, or determined in accordance with the maximum quantity of PDSCHs scheduled through one piece of DCI.

29. The UE according to claim 28, wherein a value of the first parameter is smaller than or equal to the maximum quantity of PDSCHs scheduled through one piece of DCI.

30. The UE according to claim 28, wherein when the first parameter is determined in accordance with the maximum quantity of PDSCHs scheduled through one piece of DCI, the maximum quantity of PDSCHs scheduled through one piece of DCI is configured by the network device, or obtained from a PDSCH time-domain scheduling parameter table.

31. A power control parameter determination device applied to a User Equipment (UE), comprising a determination unit configured to determine a control parameter for power control over a Physical Uplink Control Channel (PUCCH) in accordance with a first parameter, wherein the first parameter is the quantity of bits of a Hybrid Automatic Repeat reQuest Acknowledge (HARQ-ACK) for HARQ-ACK bundling in the case that a plurality of Physical Downlink Shared Channels (PDSCHs) is scheduled through one piece of Downlink Control Information (DCI).

32. A processor-readable storage medium storing therein a computer program, wherein the computer program is executed by a processor, to implement the power control parameter determination method according to any one of claims 1 to 15.

12

Base station

11

UE

FIG. 1

determining a control parameter for power control over a PUCCH in
accordance with a first parameter

S201

FIG. 2

PUCCH resource indicator

PUCCH resource indicator

PUCCH

P1  P2  P3  P4  P5  P6          P7  P8

DCI-1
DAI=1

DCI-1
DAI=2

⊠ DCI

▨ PDSCH

▓ PUCCH carrying HARQ-ACK

| 0/1 | 0/1 | 0/1 | 0/1 | 0/1 | 0/1 | NACK | NACK |

a calculation result of f(N,X) for DCI-1 is 4

a calculation result of f(N,X) for DCI-2 is 2

**FIG. 3**

|     | PDSCH-1 | PDSCH-2 | PDSCH-3 | PDSCH-4 | PDSCH-5 | PDSCH-6 | PDSCH-7 | PDSCH-8 |
|-----|---------|---------|---------|---------|---------|---------|---------|---------|
| TB1 | Y | Y | N | N | Y | Y | Y | Y |
| TB1 | Y | Y | Y | N | N | N | N | N |

**FIG. 4**

power control parameter determination device — 500

determination unit — 501

**FIG. 5**

FIG. 6

## INTERNATIONAL SEARCH REPORT

| | International application No. |
|---|---|
| | **PCT/CN2022/124351** |

**A. CLASSIFICATION OF SUBJECT MATTER**

H04W 52/24(2009.01)i; H04W 52/48(2009.01)i

According to International Patent Classification (IPC) or to both national classification and IPC

**B. FIELDS SEARCHED**

Minimum documentation searched (classification system followed by classification symbols)

H04W; H04Q; H04L

Documentation searched other than minimum documentation to the extent that such documents are included in the fields searched

Electronic data base consulted during the international search (name of data base and, where practicable, search terms used)

CNPAT, CNKI, WPI, EPODOC, 3GPP: 功率, 控制, 参数, 物理上行控制信道, 下行控制信息, 调度, 多, 物理下行共享信道, 比特, bit, PUCCH, DCI, PDSCH, HARQ, ACK, NACK, multi+, schedul+, control+, power, parameter

**C. DOCUMENTS CONSIDERED TO BE RELEVANT**

| Category* | Citation of document, with indication, where appropriate, of the relevant passages | Relevant to claim No. |
|---|---|---|
| X | WO 2021162845 A1 (QUALCOMM INC.) 19 August 2021 (2021-08-19) description, paragraphs 57-213 | 1-32 |
| X | WO 2021162857 A1 (QUALCOMM INC.) 19 August 2021 (2021-08-19) description, paragraphs 5-81 | 1-32 |
| A | CN 105578608 A (CHINA ACADEMY OF TELECOMMUNICATION RESEARCH OF MIIT) 11 May 2016 (2016-05-11) entire document | 1-32 |
| A | HUAWEI. "Feature lead summary of HARQ enhancements for NR-U" *3GPP TSG RAN WG1 Meeting #98 R1-1909496*, 30 August 2019 (2019-08-30), entire document | 1-32 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **23 December 2022** | **03 January 2023** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2022/124351**

| Patent document cited in search report | | | Publication date (day/month/year) | Patent family member(s) | | | Publication date (day/month/year) |
|---|---|---|---|---|---|---|---|
| WO | 2021162845 | A1 | 19 August 2021 | CN | 115066855 | A | 16 September 2022 |
| | | | | US | 2021258997 | A1 | 19 August 2021 |
| WO | 2021162857 | A1 | 19 August 2021 | CN | 115104268 | A | 23 September 2022 |
| | | | | US | 2021258998 | A1 | 19 August 2021 |
| CN | 105578608 | A | 11 May 2016 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111308588